# EUROPEAN PATENT SPECIFICATION

(11) **EP 3 388 348 B1**
(45) Date of publication and mention of the grant of the patent: **19.08.2020**
(21) Application number: 16873393.9
(22) Date of filing: 09.12.2016
(51) Int. Cl.: B64F 1/305, E01D 15/24, G09F 9/30, G01S 17/50, G01S 15/50, G06K 19/07, G06K 19/06

(54) **BOARDING BRIDGE HAVING TRANSPARENT DISPLAY, AND METHOD OF CONTROLLING SAME**
FLUGGASTBRÜCKE MIT TRANSPARENTER ANZEIGE UND VERFAHREN ZUR STEUERUNG DAVON
PASSERELLE D'EMBARQUEMENT COMPORTANT UN AFFICHAGE TRANSPARENT, ET PROCÉDÉ DE COMMANDE ASSOCIÉ

(30) Priority: 10.12.2015 KR 20150175548
(43) Date of publication of application: 17.10.2018
(73) Proprietor: Seo, Yong Jun, Daegu 42038 (KR)
(72) Inventor: SEO, Jin Soo, Daegu 42038 (KR); SEO, Yong Jun, Daegu 42038 (KR)
(74) Representative: Boggio Merlo, Anita
(86) International application number: PCT/KR2016/014464
(87) International publication number: WO 2017/099528

(56) References cited:
- EP-A1- 2 958 099
- JP-A- 2005 190 826
- KR-A- 960 036 858
- KR-A- 20130 111 051
- KR-A- 20140 102 894
- KR-A- 20150 074 553
- US-A- 5 950 266
- US-A1- 2004 019 984
- US-B1- 6 212 724

## Description

### [Technical Field]

The present disclosure relates to a boarding bridge having a transparent display and a method of controlling the same, and more particularly, to a boarding bridge providing an image to passengers who pass through the interior of the boarding bridge through a transparent display, and a method of controlling the same.

### [Background Art]

Generally, in order for passengers to board and get off a large transportation means such as an aircraft and a cruise ship, a boarding bridge, which is a type of bridge for interconnecting a terminal gate and an aircraft door, is installed in a terminal of an airport or a port.

The boarding bridge has a structure in which a plurality of tunnels of a quadrilateral shape are connected to be overlapped with one another, and the entire length of the boarding bridge may be extended or shortened by pulling in or pulling out some tunnels according to a position of the aircraft. This allows the passengers to ride from the gate to the aircraft or to travel from the aircraft to the gate by connecting the boarding bridge to the aircraft door.

Such a boarding bridge is a first gateway between a country and a country, and between a region and a region, and is an essential route for the passengers using the aircraft, the boarding bridge may be used as a venue for launching advertisements.

However, in order to ensure visibility of passengers passing through the inside of the boarding bridge in addition to the ease of operation required for precision, such as docking to the aircraft door, a typical boarding bridge has a wall made of a transparent outer wall such as a glass wall. Therefore, it has been difficult to attach advertisements that could impair the visibility of the transparent outer wall to such a boarding bridge, and there was a limitation that the visibility of the transparent outer wall should not be hindered even if the advertisements are attached to the boarding bridge.
EP 2 958 099 A discloses a boarding bridge.

### [Disclosure]

### [Technical Problem]

An object of the present disclosure is to provide a boarding bridge having a transparent display capable of reproducing an advertisement image without hindering visibility of a transparent outer wall of the boarding bridge, and a method of controlling the same.

### [Technical Solution]

According to an aspect of the present disclosure, a boarding bridge includes a first tunnel configured to be connected to a terminal gate; a second tunnel configured to be overlappingly connected to the first tunnel; and a controller, wherein each of the first tunnel and the second tunnel has a plurality of transparent displays and includes one or more overlap detecting sensors, and the controller being configured such that when it is detected that the transparent displays of the first and second tunnels are overlapped through the overlap detecting sensors that detect whether or not the transparent displays of the first tunnel and the transparent displays of the second tunnel are overlapped with each other, the controller selectively controls an image reproduction of the transparent displays of the first and second tunnels so that images reproduced in the transparent displays of the first and second tunnels are not overlapped with each other.

The first and second tunnels may include a transparent outer wall, and the plurality of transparent displays may be disposed inside of the transparent outer wall and display a screen toward the inside of the first and second tunnels.

The overlap detecting sensors may be each provided to one side of the transparent displays disposed in the second tunnel to detect an approach of the other end portion of the first tunnel which is adjacent to the second tunnel.

The overlap detecting sensors may be a plurality of proximity sensors or a plurality of limit switches.

The boarding bridge may further include a plurality of passenger movement detecting sensors, wherein the plurality of passenger movement detecting sensors may be disposed on the side of the respective entrances opposite to a connection part of the first tunnel and the second tunnel, and the passenger movement detecting sensors may include any one of an infrared sensor, an optical sensor, and an ultrasonic sensor.

A lower portion of the transparent outer wall may further include a plurality of transparent displays that display a screen toward the outside of the first and second tunnels.

The plurality of transparent displays may each include a directional speaker.

The plurality of transparent displays may each further include a tag, and the tag may include any one of near field communication (NFC), a QR code, and a barcode.

The transparent displays may be disposed to be vertically slidable on the transparent outer wall.

The first and second tunnels may further include a plurality of frames longitudinally disposed at a regular interval on the transparent outer wall, the respective side surfaces of the transparent displays may include a plurality of coupling protrusions, the plurality of frames may include a plurality of accommodating grooves formed along a length direction, and the transparent displays may be fixed to be movable along the length direction of the frames.

The plurality of transparent displays may include any one of a transparent liquid crystal display (LCD), a transparent light emitting diode (LED), and a transparent organic light emitting diode (OLED).

The plurality of transparent displays may be embedded in the transparent outer wall.

According to another aspect of the present disclosure, a method of controlling a boarding bridge includes detecting, by an overlap detecting sensor, whether or not transparent displays each disposed in an inner tunnel and an outer tunnel are overlapped with each other by extending and shortening the inner tunnel or the outer tunnel in a length direction; selecting at least one transparent display disposed in the inner tunnel among the overlapped transparent displays and at least one non-overlapped transparent display disposed in the outer tunnel; detecting, by a passenger movement detecting sensor, the number of moving passengers of the inner tunnel and the outer tunnel; and turning-on, by a controller, only the selected transparent displays when the number of moving passengers detected by the passenger movement detecting sensor is a reference or more.

The method may further include determining a movement direction of the passengers through the passenger movement detecting sensor; and reproducing an image for arrival or an image for departure through the selected transparent displays along the movement direction of the passengers.

### [Advantageous Effects]

According to various exemplary embodiments of the present disclosure, it is possible to provide an effective advertisement image to passengers passing through the boarding bridge by reproducing the advertisement image only in the time zone in which the passengers move without hindering visibility of a transparent outer wall of the boarding bridge, and preventing overlapping of an advertisement screen that may occur due to overlapping of the tunnels.

### [Description of Drawings]

FIG. 1 is a view illustrating an overall configuration of a boarding bridge according to a first exemplary embodiment of the present disclosure;
FIG. 2 is a view illustrates a state in which a second tunnel of the boarding bridge illustrated in FIG. 1 is maximally extended from a first tunnel;
FIG. 3 is a view illustrating a figure in which the second tunnel illustrated in FIG. 2 is partially moved to one end portion of the first tunnel along an outer surface of the first tunnel;
FIG. 4 is a view illustrating a moment when a second proximity sensor disposed at a ninth portion detects proximity with the other end portion of the first tunnel by the second tunnel illustrated in FIG. 3 moving to one end portion of the first tunnel;
FIG. 5 is a view schematically illustrating a figure in which the boarding bridge illustrated in FIG. 3 is connected to an aircraft and passengers move through the boarding bridge;
FIG. 6 is a view illustrating an operation process of a plurality of transparent displays included in the boarding bridge illustrated in FIGS. 2 and 3;
FIG. 7 is a view illustrating a state in which a second tunnel is maximally extended from a first tunnel according to a second exemplary embodiment of the present disclosure;
FIG. 8A is a view illustrating a figure in which a transparent display is disposed in an upper portion of a first portion of a first outer wall according to one modified example of the present disclosure;
FIG. 8B is a view illustrating a figure in which the transparent display illustrated in FIG. 8A is slid to a lower portion of the first portion of the first outer wall;
FIG. 9A is a cross-sectional view of a structure of the transparent first outer wall, a frame, and the transparent display illustrated in FIGS. 8A and 8B as viewed from above; and
FIG. 9B is a cross-sectional view of a structure of the transparent first outer wall, a frame, and the transparent display illustrated in FIGS. 8A and 8B as viewed from a side.

### [Best Mode]

Hereinafter, exemplary embodiments of the present disclosure will be described in detail with reference to the accompanying drawings. Exemplary embodiments to be described below will be described on the basis of exemplary embodiments most appropriate for understanding technical features of the present disclosure, and these exemplary embodiments do not limit the technical features of the present disclosure, but exemplify that the present disclosure may be implemented like these exemplary embodiments.

Therefore, the present disclosure may be variously modified without departing from the technical scope of the present disclosure through exemplary embodiments to be described below, and these modifications will fall within the technical scope of the present disclosure. In addition, to assist in the understanding of exemplary embodiments to be described below, components performing the same operations and related components in the respective exemplary embodiments will be denoted by the same or similar reference numerals throughout the accompanying drawings.

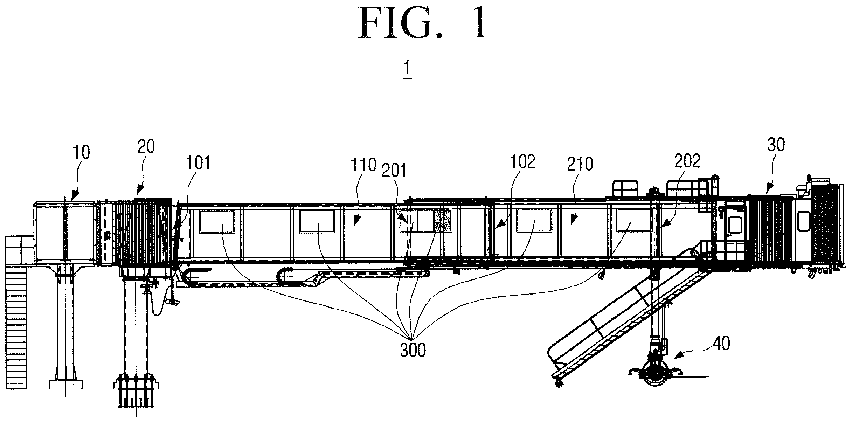

FIG. 1 is a front view illustrating an overall configuration of a boarding bridge 1 according to a first exemplary embodiment of the present disclosure; The boarding bridge 1 is for connecting doors of large transportation means such as aircrafts or cruise ships to terminal gates of airports and ports, and hereinafter, for convenience of explanation, the aircraft will be described as an example of the transportation means and the boarding bridge 1 that may be connected to the aircraft will be described as an example.

The boarding bridge 1 may include a fixed tunnel booth 10 connected from a terminal gate (not shown) and a rotunda 20 connected from the fixed tunnel booth 10 and rotatable at a predetermined angle. The rotunda 20 may rotate first and second tunnels 100 and 200 depending on a position of an aircraft (not shown).

One end portion 101 of the first tunnel 100 may be connected to the rotunda 20, and the other end portion 102 opposite to one end portion of the first tunnel 100 may be connected to one end portion 201 of the second tunnel 200. A cap 30 which may be directly connected to an aircraft door (not shown) may be connected to the other end portion 202 opposite to one end portion 201 of the second tunnel 200 connected to the first tunnel 100.

An outer surface of the second tunnel 200 may be connected to be overlapped with the first tunnel 100 in a manner to surround an outer surface of the first tunnel 100. Therefore, the second tunnel 200 is reciprocally movable along the outer surface of the first tunnel 100. In addition, the second tunnel 200 may be easy to reciprocally move by being connected to a drive unit 40 having a wheel. Thereby, the second tunnel 200 may reciprocally move along a length direction of the first tunnel 100 from the other end portion 102 of the first tunnel 100 through driving force of a driving part (not shown), and an entire length of the boarding bridge 1 may be extended or shortened. Such an operation of the first and second tunnels 100 and 200 may be manipulated through a controller (not shown). The controller may be provided in a predetermined space in the boarding bridge 1 or the terminal gate connected to the boarding bridge 1, and may include an input part for manipulation of a user.

Since the configuration in which the second tunnel 200 is reciprocally moved along the outer surface of the first tunnel 100 is the same as or similar to the conventional technology, a detailed description thereof will be omitted.

The first and second tunnels 100 and 200 may include transparent first and second outer walls 110 and 210, respectively, through which external light may transmit. The first and second outer walls 110 and 210 may be provided in a pair on both sides of the first and second tunnels 100 and 200, respectively, and may be formed integrally with ceilings or bottoms of the first and second tunnels 100 and 200.

Through the transparent first and second outer walls 110 and 210, passengers passing through the inside of the first and second tunnels 100 and 200 may secure a view to the outside of the boarding bridge 1. In addition, the view from the outside to the inside of the first and second tunnels 100 and 200 may also be secured.

A plurality of transparent displays 300 may be disposed on the first and second outer walls 110 and 210. Therefore, when an image is reproduced through the transparent displays 300, the passengers may simultaneously view the image provided by the transparent displays 300 together with the background positioned behind the transparent displays 300. The plurality of transparent displays 300 may include any one of a transparent liquid crystal display (LCD), a transparent light emitting diode (LED), and a transparent organic light emitting diode (OLED).

Therefore, when the image is reproduced in the transparent displays 300, the external background of the first and second tunnels 100 and 200 through the transparent first and second outer walls 110 and 210 and the image reproduced in the transparent displays 300 may be simultaneously viewed to the passengers moving in the inside of the first and second tunnels 100 and 200, and when the image is not reproduced in the transparent display 300, the external background of the first and second tunnels 100 and 200 may be viewed to the passengers moving in the inside of the first and second tunnels 100 and 200 through the transparent first and second outer walls 110 and 210 and the transparent displays 300.

Thereby, it is possible to reproduce an advertisement image to the passengers passing through the inside of the boarding bridge 1 and to minimize an interference of a view to the outside the boarding bridge 1, and when the image is not reproduced, it is possible to secure an existing clear external view. Further, since the boarding bridge 1 includes the transparent displays 300, it is possible to secure the view of the inside of the boarding bridge 1 viewed from the outside of the boarding school bridge 1.

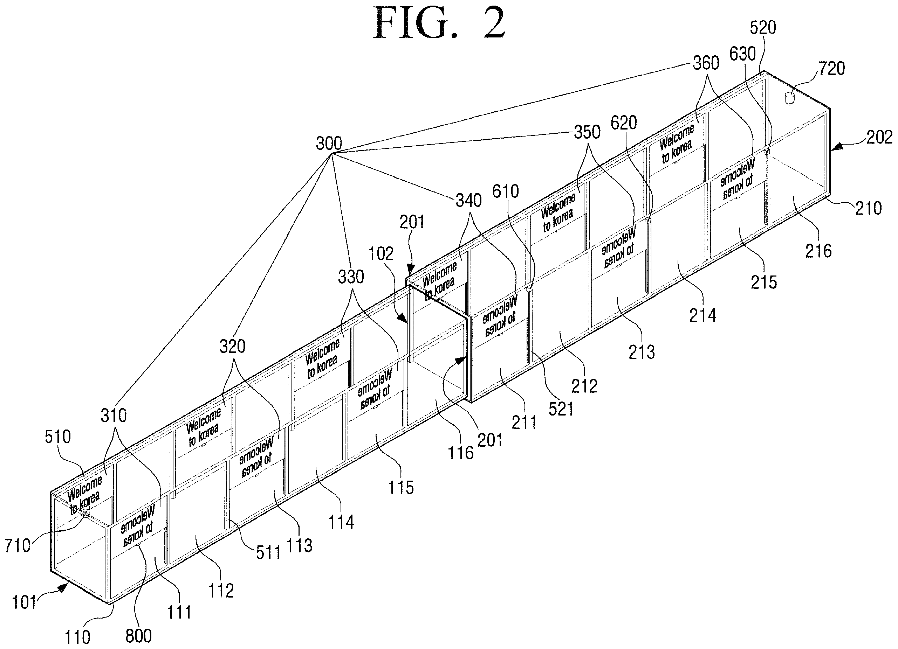

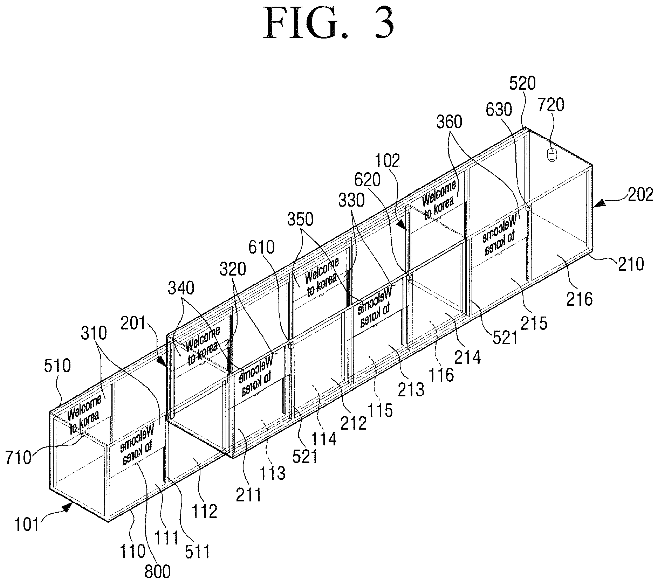

The plurality of transparent displays 300 may include first to sixth transparent displays 310 to 360 provided in a pair on both side walls of the first and second outer walls 110 and 210, as illustrated in FIGS. 2 and 3. Further, the number of the transparent displays 300 may be variously changed depending on a structure of the first and second tunnels 100 and 200.

Detailed configurations and operations of the first and second tunnels 100 and 200 will be described in detail below.

FIG. 2 is a view illustrates a state in which a second tunnel 200 is maximally extended from a first tunnel 100 according to a first exemplary embodiment of the present disclosure and FIG. 3 is a view illustrating a figure in which the second tunnel 200 is partially moved to one end portion 101 of the first tunnel 100 along an outer surface of the first tunnel 100.

Hereinafter, the detailed configurations and operations of the first and second tunnels 100 and 200 will be described with reference to FIGS. 2 and 3.

As described above, the first and second tunnels 100 and 200 have a rectangular tunnel structure, and the second tunnel 200 surrounds the outer surface of the first tunnel 100. Therefore, the second tunnel 200 may reciprocally move along the outer surface of the first tunnel 100. The first and second tunnels 100 and 200 each have a structure including the first and second outer walls 110 and 210 on both side surfaces, and some numerical representations of symmetrically disposed components are omitted for convenience of explanation.

The first and second tunnels 100 and 200 may include first and second frame structures 510 and 520, respectively, made of a metal material including iron, and the transparent first and second outer walls 110 and 210 may be each supported through the first and second frame structures 510 and 520. Further, the first and second outer walls 110 and 210 may further include a plurality of frames 511 and 521 longitudinally disposed at a regular interval, and the first and second outer walls 110 and 210 may be partitioned into the respective portions through a pair of frames facing each other. In addition, the plurality of frames 511 and 521 may be included integrally in the first and second frame structures 510 and 520. In FIGS. 2 and 3, the overlapped numerical representation of the plurality of frames 511 and 521 is omitted for convenience of explanation.

Although FIGS. 2 and 3 illustrate an example in which the first and second outer walls 110 and 210 are partitioned into a total of six first to sixth portions 111 to 116 each partitioned on both side surfaces of the first tunnel 100 and a total of six seventh to twelfth portions 211 to 216 each partitioned on both side surfaces of the second tunnel 200, the configuration of the first and second outer walls 110 and 210 and the partition of the respective portions may also be modified according to the configuration of the first and second frame structures 510 and 520 and a layout of the frames.

A plurality of transparent displays may be disposed on the transparent first and second outer walls 110 and 210, and FIGS. 2 and 3 illustrate an example in which the first to sixth transparent displays 310 to 360 configured in a pair may be disposed on the transparent first and second outer walls 110 and 210. The first to sixth transparent displays 310 to 360 may be disposed in the inside of the boarding bridge 1 and may transmit an advertisement image to the passengers passing through the inside of the boarding bridge 1 by displaying a screen toward the inside of the first and second tunnels 100 and 200.

The first to sixth transparent displays 310 to 360 may be disposed at the upper portions of the transparent first and second outer walls 110 and 210 so that the eyes of the passengers passing through the inside of the boarding bridge 1 may easily reach.

Further, the first to sixth transparent displays 310 to 360 may be disposed on the transparent first and second outer walls 110 and 210 by being directly coupled to the transparent first and second outer walls 110 and 210 or being coupled to the first and second frame structures 510 and 520.

In addition, the plurality of transparent displays 300 may be disposed to correspond to the transparent outer walls of the respective portions partitioned by the plurality of first and second frames 511 and 521. Thereby, an external background of the boarding bridge 1 may be viewed to the passengers through the transparent displays 300 without interference of the first and second frame structures 510 and 520. Further, the plurality of transparent displays 300 are embedded in the transparent first and second outer walls 110 and 210, thereby making it possible to reproduce an image which is more integrated with the external background of the boarding bridge 1.

Specifically, the plurality of transparent displays 300 may be disposed one by one on an upper portion of each of the first to twelfth portions 111 to 116 and 211 to 216. In addition, the plurality of transparent displays 300 may be disposed one by one after the other on the first to twelfth portions 111 to 116 and 211 to 216. For example, as illustrated in FIGS. 2 and 3, the first to sixth transparent displays 310 to 360 may be disposed one by one on the first, third, fifth, seventh, and ninth, eleventh portions 111, 113, 115, 211, 213, and 215, and the second, fourth, sixth, eighth, tenth, and twelfth portions 112, 114, 116, 212, 214, and 216 may continuously maintain a clean view of the outer walls without the coupling of the transparent displays 300.

Through the various arrangements of the transparent displays 300, it is possible to adjust a transmission method of the advertisement image reproduced through the transparent displays 300. In addition, the plurality of transparent displays 300 may also be disposed on only one of the wall surfaces without being symmetrical on both wall surfaces of the first and second tunnels 100 and 200.

As described above, in order for the boarding bridge 1 to connect the terminal gate with the aircraft door, the second tunnel 200 connected to the other end portion 102 of the first tunnel 100 reciprocally moves in the length direction of the first tunnel 100 along the outer surface, thereby making it possible to adjust the entire length of the boarding bridge 1. For example, as illustrated in FIG. 2, the second tunnel 200 moves to be maximally extended from the other end portion 102 of the first tunnel 100, thereby making it possible to maximally extend the entire length of the boarding bridge 1.

In addition, as illustrated in FIG. 3, the second tunnel 200 moves toward one end portion 101 of the first tunnel 100 along the outer surface of the first tunnel 100, and a portion of the first outer wall 110 and a portion of the second outer wall 210 may be thus overlapped with each other. In this case, the third to sixth portions 113 to 116 of the first tunnel 100 and the seventh to tenth portions 211 to 214 of the second tunnel 200 may be overlapped with one another, and the second and third transparent displays 320 and 330 and the fourth and fifth transparent displays 340 and 350 may be overlapped with one another.

The first and second tunnels 100 and 200 may include one ore more overlap detecting sensors 600. The overlap detecting sensor 600 may be each provided to one side of each of the transparent displays 300 disposed in the second tunnel 200, thereby sequentially detecting an approach of the other end portion 102 of the first tunnel 100 to each of the transparent displays 300 disposed in the second tunnel 200.

Specifically, the overlap detecting sensor 600 may include first to third proximity sensors 610 to 630, and the first to third proximity sensors 610 to 630 may be provided to each one side of the third to sixth transparent displays 340 to 360 disposed in the second tunnel 200, thereby detecting the approach of the other end portion 102 of the first tunnel 100 according to the overlap of the first tunnel 100 and the second tunnel 200. As illustrated in FIG. 3, in a case in which the other end portion 102 of the first tunnel 100 approaches each of the first to third proximity sensors 610 to 630, the respective transparent displays of the second tunnel 200 connected to the first to third proximity sensors 610 to 630 start to overlap with the respective transparent displays of the first tunnel 100.

In a case in which the second tunnel 200 moves toward one end portion 101 of the first tunnel 100 along the outer surface of the first tunnel 100, the first to third proximity sensors 610 to 630 may sequentially detect that the second tunnel 200 approaches the other end portion 102 of the first tunnel 100. Therefore, the first to third proximity sensors 610 to 630 may detect the transparent displays overlapped with the fourth to sixth transparent displays 340 to 360 disposed in the second tunnel 200 and the first to third transparent displays 310 to 330 disposed in the first tunnel 100 (S100).

Thereby, the controller may select the transparent displays 310 to 340 positioned inside of the boarding bridge 1 as compared to the fourth to sixth transparent displays 340 to 360, and the transparent displays which are not overlapped with the first to third transparent displays among the fourth to sixth transparent displays 340 to 360 for image reproduction (S200).

Therefore, the controller turns on the selected transparent displays to selectively reproduce the image, thereby preventing the reproduced image from being overlapped with each other due to the image simultaneously reproduced on the overlapped transparent displays.

For example, in FIG. 3, as the third to sixth portions 113 to 116 of the first tunnel 100 are overlapped with the seventh to tenth portions 211 to 214 of the second tunnel 200 by the movement of the second tunnel 200, the second and third transparent displays 320 and 330 of the first tunnel 100 and the fourth and fifth transparent displays 340 and 350 of the second tunnel 200 are overlapped with one another.

Therefore, the first and second proximity sensors 610 and 620 that sequentially detect the approach of the other end portion of the first tunnel 100 in the movement process of the second tunnel 200 may exclude the fourth and fifth transparent displays 340 and 350 from an operation and may select and operate the remaining first to third transparent displays 310 to 330 and the sixth transparent display 360 through the controller. Therefore, even if the second and third transparent displays 320 and 330 and the fourth and fifth transparent displays 340 and 350 are overlapped with one another, it is possible to prevent the image from being reproduced through the fourth and fifth transparent displays 340 and 350, and as a result, an overlap of the reproduced image may be prevented.

As described above, even if the transparent displays 300 disposed in the first tunnel 100 and the second tunnel 200 are overlapped with one another according to the movement of the second tunnel 200, it is possible to prevent the image reproduced on the plurality of transparent displays 300 from being overlapped with each other in advance by selectively controlling the transparent displays to be operated by the controller.

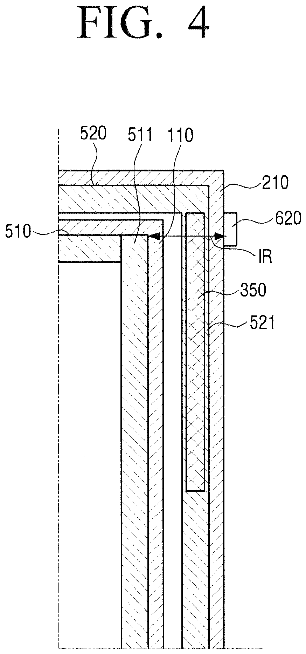

FIG. 4 is a cross-sectional view illustrating a moment when a second proximity sensor 620 disposed at a ninth portion 213 detects proximity with the other end portion 102 of the first tunnel 100 by the movement of the second tunnel 200, in a process of disposing the first tunnel 100 and the second tunnel 200 illustrated in FIG. 3.

Infrared ray (IR) emitted from the second proximity sensor 620 may transmit through the transparent second outer wall 210 and the fifth transparent display 350 of the second tunnel 200, but may be reflected by the first frame structure 510 made of an iron material of the other end portion 102 of the first tunnel 100 and the frame 511 configuring the first frame structure 510, at a moment when the other end portion 102 of the first tunnel 100 approaches the second proximity sensor 620. Thereby, the second proximity sensor 620 may detect that the other end portion 102 of the first tunnel 100 approaches, and thereby, the controller may determine a moment at which the fifth transparent display 350 and the third transparent display 330 start to be overlapped with each other. Therefore, the controller may exclude the fifth transparent display 350 that starts to overlap the third transparent display 330 from the operation.

In addition, the first to third proximity sensors 610 to 630 may detect the approach of the other end portion 102 of the first tunnel 100 using light, ultrasonic waves, and the like in addition to the infrared rays (IR).

Further, depending on the configurations of the first and second frame structures 510 and 520 and the layout of the plurality of transparent displays, the layout of the first to third proximity sensors 610 to 630 may also be varied.

The first to third proximity sensors 610 to 630 described above may be replaced with first to third limit switches. The first to third limit switches may be disposed on each one side of the plurality of transparent displays 300 disposed in the second tunnel 200.

Each limit switch may be directly interfered with the other end portion 102 of the first tunnel 100. Therefore, in a case in which the other end portion 102 of the first tunnel 100 is sequentially interfered with each limit switch according to the movement of the second tunnel 200, the limit switch interfered with the other end portion 102 of the first tunnel 100 may exclude the transparent displays 300 of the second tunnel 200 overlapped with the transparent displays 300 disposed on the first tunnel 100 by powering off the respective transparent displays 300 connected thereto.

Further, the boarding bridge 1 may further include a plurality of passenger movement detecting sensor. The plurality of passenger movement detecting sensor may include any one of an infrared sensor, an optical sensor, and an ultrasonic wave sensor, and may include first and second passenger movement detecting sensors 710 and 720.

The first and second passenger movement detecting sensors 710 and 720 may detect the number of moving passengers passing through the boarding bridge 1 and a movement direction of the passengers. To this end, the first and second passenger movement detecting sensors 710 and 720 may be disposed on the respective entrances opposite to a connection part at which the first tunnel 100 and the second tunnel 200 are connected to each other. That is, the first and second passenger movement detecting sensors 710 and 720 may be each disposed at positions opposite to the connection part of the first tunnel 100 and the second tunnel 200, and the first passenger movement detecting sensor 710 may be disposed on one end portion 101 of the first tunnel 100 and the second passenger movement detecting sensor 720 may be disposed on the other end portion 202 of the second tunnel 200.

The first and second passenger movement detecting sensors 710 and 720 may detect the number of moving passengers passing through the boarding bridge 1 (S300). If the number of moving passengers per a unit time detected through the first and second passenger movement detecting sensors 710 and 720 is transmitted to the controller, the controller may compare the number of moving passengers per a unit time with a predetermine reference.

Thereby, if the number of moving passengers per a unit time that actually moves through the boarding bridge 1 is the reference or more, the controller determines that the passenger starts to move and prepares a reproduction of an image by turning on the non-overlapping selected transparent displays (S400).

In addition, the first and second passenger movement detecting sensors 710 and 720 may detect the movement direction of the passengers passing through the boarding bridge 1 (S500). The first and second passenger movement detecting sensors 710 and 720 may be each disposed on both entrances of the first and second tunnels 100 and 200 to detect the movement direction of the passengers. The controller that determines the movement direction of the passengers through the first and second passenger movement detecting sensors 710 and 720 selectively reproduces an image for departure or an image for arrival depending on the movement direction of the passengers (S600). Since the detection of the number of moving passengers and the movement direction through the first and second passenger movement detecting sensors 710 and 720 is the same as or similar to the conventional technology, a detailed description thereof will be omitted.

Specifically, if the first and second passenger movement detecting sensors 710 and 720 detect that the passengers move from one end portion 101 of the first tunnel 100 to the other end portion 202 of the second tunnel 200, the controller may determine that the passengers move from the terminal gate to the aircraft door. Since this means that the passengers board the aircraft for takeoff, the controller may allow the selected transparent displays to reproduce the image for departure which is previously stored (S600b). The image for departure may be an advertisement image including contents of flight information, weather of the destination, news, tourist site, and the like to the passengers boarding the aircraft for takeoff.

In addition, if the first and second passenger movement detecting sensors 710 and 720 detect that the passengers move from the other end portion 202 of the second tunnel 200 to one end portion 101 of the first tunnel 100, the controller may determine that the passengers move from the aircraft door to the terminal gate. Since this means that the aircraft lands and the passengers get off the aircraft, the controller may cause the selected transparent displays to reproduce the image for arrival which is previously stored (S600a). The image for arrival may be an advertisement image including contents such as a welcome greeting, weather of the destination, news, tourist site, and the like to the passengers arriving at the aircraft in which the boarding bridge 1 is installed.

Thereafter, if all the passengers pass through the boarding bridge 1 and it is detected that the number of moving passengers passing through the boarding bridge 1 is less than the reference, the controller stops the reproduction of the image for departure or the image for arrival being reproduced and turns off the plurality of transparent displays 300 (S700).

Further, each of the plurality of transparent displays 300 may include a directional speaker (not shown). Thereby, even in a case in which different images and sounds are reproduced in each of the plurality of transparent displays 300, the directional speak may efficiently transmit the images and the sounds to the passengers by transmitting the sound to only the passengers positioned in the front of each transparent display without the respective sounds reproduced in the transparent displays adjacent to each other being interfered with each other.

In addition, each of the plurality of transparent displays 300 may include a tag 800. The tag 800 may be disposed at a lower end portion of each of the plurality of transparent displays 300 and may include any one of near field communication (NFC), a QR code, and a barcode. The passengers passing through the boarding bridge 1 may receive information on an image which is currently reproduced through smartphones of the passengers by contacting the tag 800 or scanning the tag 800 through their smarphones. Thereby, since the passenger may directly receive or store the information on the image reproduced through the transparent displays 300, a delivery effect of the advertisement may be increased.

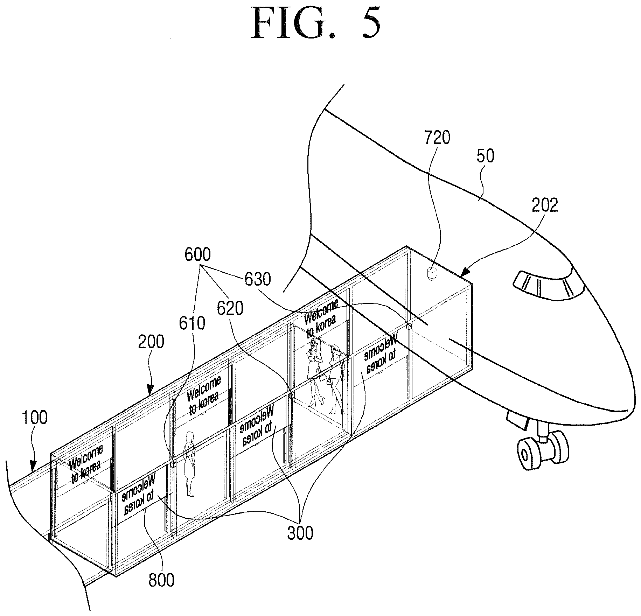

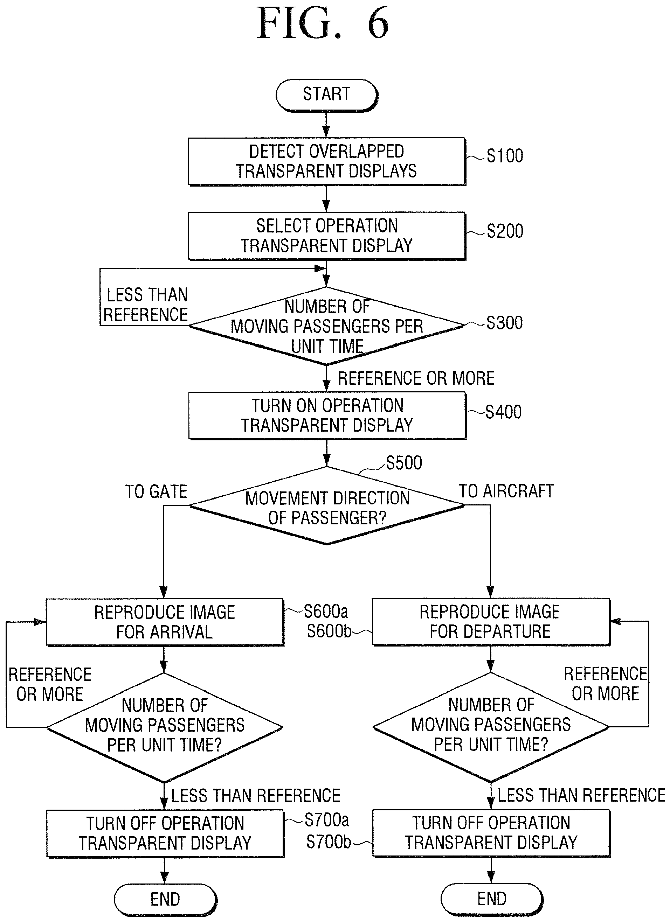

FIG. 5 illustrates that the boarding bridge 1 is connected to an aircraft 50 and the passengers move through the boarding bridge 1 and FIG. 6 illustrates an operation process of a plurality of transparent displays 300 included in the boarding bridge 1.

Hereinafter, an operation procedure of the boarding bride 1 having the transparent displays will be described below as an example when the aircraft lands at the airport with reference to FIGS. 2 to 6.

After the aircraft lands, the boarding bridge 1 prepares to allow the passengers to get off the aircraft by being connected to the door of the aircraft 50.

Depending on a position and a size of the aircraft 50, the second tunnel 200 reciprocally moves from the first tunnel 100, thereby adjusting the entire length of the boarding bridge 1, and thereby, the boarding bridge 1 may be accurately connected to the door of the aircraft.

In a case in which the second tunnel 200 moves toward one end portion 101 of the first tunnel 100 and portions of the second tunnel 200 and the first tunnel 100 are thereby overlapped with each other in order to adjust the length of the boarding bridge 1, some of the plurality of transparent displays 300 disposed in the first and second tunnels 100 and 200 are also overlapped with each other.

In this case, the plurality of overlap detecting sensors 600 disposed on one side of each of the transparent displays 300 of the tunnel 200 may detect the overlapped transparent displays among the transparent displays 300 disposed in the second tunnel 200 (S100).

If the overlap detecting sensors 600 detect the overlapped transparent displays of the second tunnel 200, the controller may select the transparent displays 300 of the first tunnel 100 and the non-overlapped transparent displays 300 of the second tunnel 200 for image reproduction (S200).

Thereafter, the controller may detect the movement of the passengers getting off the aircraft sequentially from the second passenger movement detecting sensor 720 disposed at the other end portion 202 of the second tunnel 200 to the first passenger movement detecting sensor 710 (S300).

Next, assuming that the reference of the number of moving passenger which is previously set in the controller is 10 per 5 seconds, when the actual number of moving passengers per 5 seconds received from the second passenger movement detecting sensor 720 reaches 10 or more for the first time, the controller prepares a reproduction of an image by turning on the selected transparent displays (S400).

The controller may determine the movement direction of the passengers through the first and second passenger movement detecting sensors 710 and 720 (S500).

Thereafter, the controller determines that the movement direction of the passengers is from the door of the aircraft at which the second passenger movement detecting sensor 720 is disposed to the terminal gate at which the first passenger movement detecting sensor 710 is disposed, and then reproduces the image for arrival through the selected transparent displays (S600a). While the passengers move to the terminal gate through the boarding bridge 1, since the number of moving passengers detected through the first and second passenger movement detecting sensors 710 and 720 is the reference or more, the image for arrival may be continuously reproduced. Thereafter, when all the passengers have left the boarding bridge 1, the number of moving passengers in unit time detected from the first and second passenger movement detecting sensors 710 and 720 is less than the reference, and from this time, the controller may stop the reproduction of the image and turn off all the transparent displays 300 (S700a).

Contrary to the example in which the passengers get off the aircraft described above, even in a case in which the passengers board the aircraft, the image for departure may be reproduced only in the time zone in which the passenger pass through the boarding bridge 1 (S600b), and when the number of moving passengers is less than the reference, all the transparent displays 300 may be turned off (S700b).

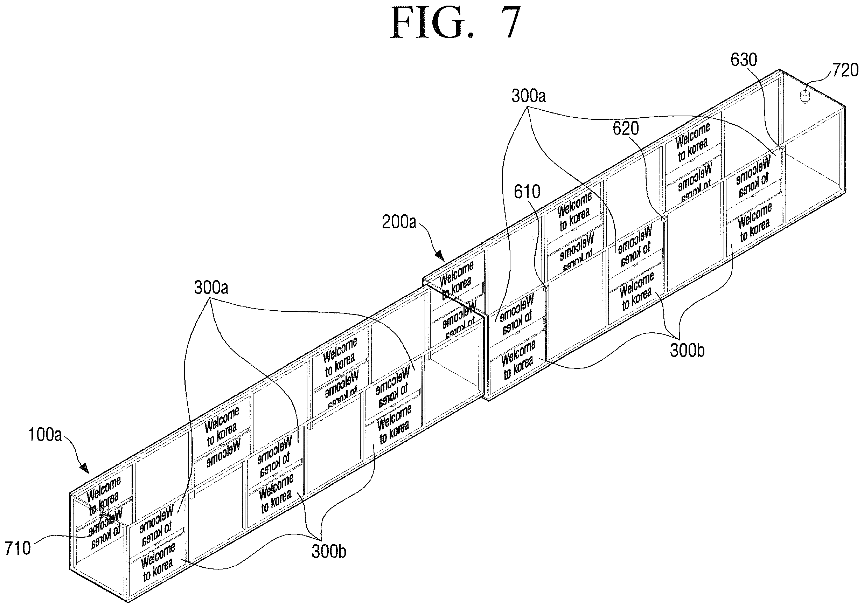

FIG. 7 is a view illustrating a state in which a second tunnel 200a is maximally extended from a first tunnel 100a according to a second exemplary embodiment of the present disclosure. The first and second tunnels 100a and 200a according to the second exemplary embodiment of the present disclosure have substantially the same configuration as that of the first and second tunnels 100 and 200 according to the first exemplary embodiment of the present disclosure, but have a difference that they may further include a plurality of transparent displays 300a disposed on upper portions of the first and second outer walls 110a and 210a and displaying a screen to the inside of the first and second tunnels 100a and 200a and a plurality of transparent displays 300b disposed on lower portions of the first and second outer walls 110a and 210a and displaying a screen to the outside of the first and second tunnels 100a and 200a.

Since the view of people located outside the boarding bridge 1 may be more easily contacted with the plurality of transparent displays 300b disposed on the lower portions of the first and second outer walls 110a and 210a than the view of the passengers passing through the inside of the boarding bridge 1, it is possible to expand the range of advertisement through the boarding bridge 1 by displaying the screen toward the outside of the boarding bridge 1.

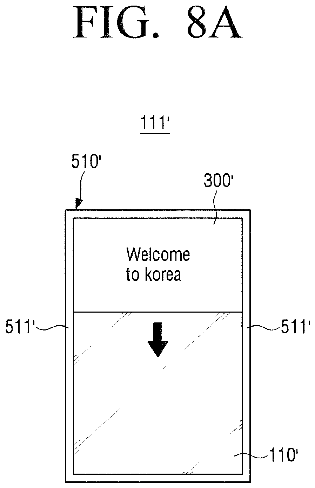

FIGS. 8A to 9B are views illustrating one modified example in which the plurality of transparent displays 300 according to the first exemplary embodiment of the present are disposed to be vertically slidable on the first and second transparent outer walls 110 and 210. In FIGS. 8A to 9B, only a first portion 111' corresponding to the first portion 111 of the first tunnel 100 according to the first exemplary embodiment of the present disclosure is illustrated for convenience of explanation, and a structure in which a transparent display 300' vertically slides will be described.

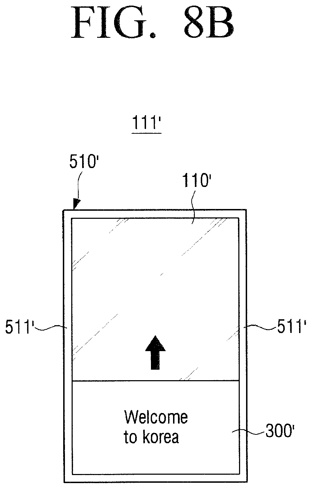

FIGS. 8A and 8B are front views of a first portion 111' of a first outer wall 110' according to one modified example of the present disclosure when being viewed from the inside of the boarding bridge and illustrate a figure in which the transparent display 300' between a pair of frames 511' longitudinally disposed vertically slides along a length direction of the pair of frames 511'.

As such, the transparent display 300' vertically slides, thereby making it possible to adjust a height of the transparent display 300' according to individual views of the passengers passing through the boarding bridge 1. In addition, the transparent display 300' is selectively moved to a lower portion of the first outer wall 110', thereby reproducing an image through a lower transparent display 300' without interfering with the views of the passengers to an external background of the boarding bridge 1.

In addition, by selectively disposing some of the plurality of transparent displays on an upper portion and the remaining portions on the lower portion, the transparent displays disposed on the upper portion may display a screen toward the passenger inside the boarding bridge 1 and the transparent displays disposed on the lower portion may display the screen toward the outside of the boarding bridge 1. Thereby, by vertically changing a position of one transparent display, the image may be selectively reproduced toward the inside or the outside of the boarding bridge 1.

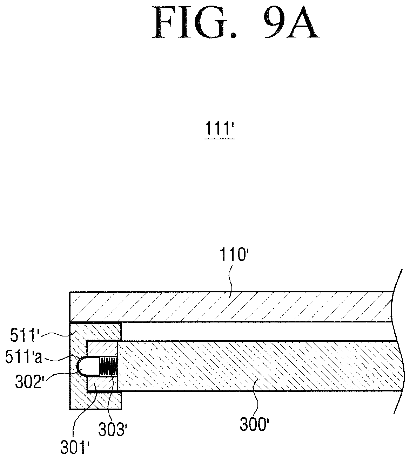

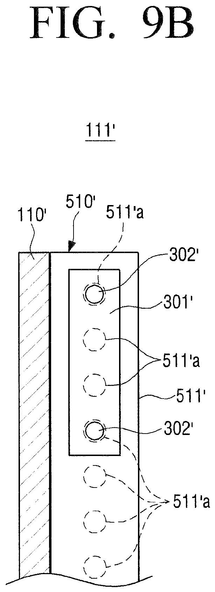

FIGS. 9A and 9B are cross-sectional views illustrating structures of the transparent first outer wall 110', the frame 511', and the transparent display 300' illustrated in FIGS. 8A and 8B in a different direction.

Referring to FIGS. 9A and 9B, the transparent first outer wall 110' may be coupled to a first frame structure 510', and the frame 511' longitudinally arranged may include a rail part formed along the length direction. The rail part of the frame 511' is formed to correspond to a thickness of the transparent display 300', such that a side end portion of the transparent display 300' may be inserted into the rail part of the frame 511'. In addition, the transparent display 300' may include bezels 301' in both side end portions, and the bezel 301' is inserted into the rail part of the frame 511', thereby making it possible to allow the transparent display 300' to vertically slide on the frame 511'.

Further, the bezels 301' may further include a plurality of coupling protrusions 302' protruding in a side direction of the transparent display 300', and each of the plurality of coupling protrusions 302' may be coupled to a spring 303' to be led in and led out in the side direction of the transparent display 300' from the bezel 301'.

The rail part of the frame 511' may include a plurality of accommodating grooves 511'a formed along the length direction of the frame 511'. The accommodating groove 511'a has a shape corresponding to that of the coupling protrusion 302' and the coupling protrusion 302' may be selectively coupled to the plurality of accommodating grooves 511'a.

Thereby, the transparent display 300' may be coupled to the rail part of the pair of frames 511' to vertically slide along the length direction of the frame 511' and may be fixed on a specific position by selectively coupling the coupling protrusion 302' and the plurality of accommodating grooves 511'a to each other.

In addition, in a case in which the user applies force to the transparent display 300' to move the fixed transparent display 300', the coupling protrusion 302' connected to the spring 303' is led in the inside of the bezel 301', thereby making it possible to vertically move the transparent display 300', and when the movement of the transparent display 300' is completed, the coupling protrusion 302' is again coupled to the accommodating groove 511'a by elasticity of the spring 303', thereby making it possible to fix the position of the transparent display 300'.

Further, the position at which the transparent display 300' is fixed may be adjusted by changing the number of the plurality of accommodating grooves 511'a formed in the frame 511' and an interval thereof.

The boarding bridge having the transparent display according to the various exemplary embodiments of the present disclosure described above may prevent an overlap of the reproduced images by selectively controlling the reproduction of the image through the overlap detecting sensors even in a case in which some of the transparent displays disposed on the transparent outer wall are overlapped with each other by the overlap of the tunnels. Further, since the image may be automatically reproduced only in the time zone in which the passengers pass through the boarding bridge through the passenger movement detecting sensors, it is possible to prevent unnecessary waste of power, and since the image matched to a situation is automatically reproduced by automatically determining whether the passengers board the aircraft or get off the aircraft through the passenger movement detecting sensor, an advertisement effect of the reproduced image may be increased without a separate manipulation.

Although the various exemplary embodiments of the present disclosure have been individually described hereinabove, the respective exemplary embodiments are not necessarily implemented singly, but may also be implemented so that configurations and operations thereof are combined with those of one or more other exemplary embodiments.

Although the exemplary embodiments of the present disclosure have been illustrated and described hereinabove, the present disclosure is not limited to the specific exemplary embodiments described above, but may be variously modified by those skilled in the art to which the present disclosure pertains without departing from the scope of the disclosure as claimed in the claims. These modifications should also be understood to fall within the technical scope of the present disclosure.

## Claims

1. A boarding bridge comprising:
a first tunnel (100) configured to be connected to a terminal gate;
a second tunnel (200) configured to be overlappingly connected to the first tunnel; and
a controller,
wherein each of the first tunnel and the second tunnel has a plurality of transparent displays (300,310,320,330,340,350,360) and **characterised in that** each of said tunnels includes one or more overlap detecting sensors (600, 610, 620, 630), and the controller being configured such that
when it is detected that the transparent displays of the first and second tunnels are overlapped through the overlap detecting sensors that detect whether or not the transparent displays of the first tunnel and the transparent displays of the second tunnel are overlapped with each other, the controller selectively controls an image reproduction of the transparent displays of the first and second tunnels so that images reproduced in the transparent displays of the first and second tunnels are not overlapped with each other.

2. The boarding bridge as claimed in claim 1, wherein both side walls of the first and second tunnels include a transparent outer wall, and
the plurality of transparent displays are disposed inside of the transparent outer wall and display a screen toward the inside of the first and second tunnels.

3. The boarding bridge as claimed in claim 2, wherein the overlap detecting sensors are each provided to one side of the transparent displays disposed in the second tunnel to detect an approach of the other end portion of the first tunnel which is adjacent to the second tunnel.

4. The boarding bridge as claimed in claim 2, wherein the overlap detecting sensors are a plurality of proximity sensors or a plurality of limit switches.

5. The boarding bridge as claimed in claim 1, further comprising a plurality of passenger movement detecting sensors,
wherein the plurality of passenger movement detecting sensors are disposed on the side of the respective entrances opposite to a connection part of the first tunnel and the second tunnel, and
the passenger movement detecting sensors include any one of an infrared sensor, an optical sensor, and an ultrasonic sensor.

6. The boarding bridge as claimed in claim 2, wherein a lower portion of the transparent outer wall further includes a plurality of transparent displays that display a screen toward the outside of the first and second tunnels.

7. The boarding bridge as claimed in claim 4, wherein the plurality of transparent displays each include a directional speaker.

8. The boarding bridge as claimed in claim 7, wherein the plurality of transparent displays each further include a tag, and
the tag includes any one of near field communication (NFC), a QR code, and a barcode.

9. The boarding bridge as claimed in claim 2, wherein the transparent displays are disposed to be vertically slidable on the transparent outer wall.

10. The boarding bridge as claimed in claim 9, wherein the first and second tunnels further include a plurality of frames longitudinally disposed at a regular interval on the transparent outer wall,
the respective side surfaces of the transparent displays include a plurality of coupling protrusions,
the plurality of frames include a plurality of accommodating grooves formed along a length direction, and
the transparent displays are fixed to be movable along the length direction of the frames.

11. The boarding bridge as claimed in claim 2, wherein the plurality of transparent displays include any one of a transparent liquid crystal display (LCD), a transparent light emitting diode (LED), and a transparent organic light emitting diode (OLED).

12. The boarding bridge as claimed in claim 2, wherein the plurality of transparent displays are embedded in the transparent outer wall.

13. A method of controlling a boarding bridge, the method comprising:
detecting, by an overlap detecting sensor (600, 610, 620, 630), whether or not transparent displays (300, 310, 320, 330, 340, 350, 360) each disposed in an inner tunnel and an outer tunnel are overlapped with each other by extending and shortening the inner tunnel or the outer tunnel in a length direction;
selecting at least one transparent display disposed in the inner tunnel among the overlapped transparent displays and at least one non-overlapped transparent display disposed in the outer tunnel;
detecting, by a passenger movement detecting sensor (710, 720), the number of moving passengers of the inner tunnel and the outer tunnel; and
turning-on, by a controller, only the selected transparent displays when the number of moving passengers detected by the passenger movement detecting sensor is a reference or more.

14. The method as claimed in claim 13, further comprising:
determining a movement direction of the passengers through the passenger movement detecting sensor; and
reproducing an image for arrival or an image for departure through the selected transparent displays along the movement direction of the passengers.

## Patentansprüche

1. Boardingbrücke, welche umfasst:
einen ersten Tunnel (100), der ausgestaltet ist, mit einem Terminal-Gate verbunden zu werden;
einen zweiten Tunnel (200), der ausgestaltet ist, mit dem ersten Tunnel überlappend verbunden zu werden; und
eine Steuerung,
worin jede von dem ersten Tunnel und dem zweiten Tunnel mehrere transparente Anzeigen (300, 310, 320, 330, 340, 350, 360) aufweist, und
**dadurch gekennzeichnet, dass** jeder der Tunnel einen oder mehrere Überlappungserfassungssensoren (600, 610, 620, 630) umfasst, und die Steuerung derart ausgestaltet ist, dass
wenn durch die Überlappungserfassungssensoren die erfassen, ob sich die transparenten Anzeigen des ersten Tunnels und die Überlappungserfassungssensoren, die erfassen, ob sich die transparenten Anzeigen des ersten Tunnel und die transparenten Anzeigen des zweiten Tunnel miteinander überlappen oder nicht, erfasst wird, dass sich die transparenten Anzeigen des ersten und zweiten Tunnels überlappen, die Steuerung eine Bildwiedergabe der transparenten Anzeige des ersten und zweiten Tunnels derart wählbar steuert, dass in den transparenten Anzeigen des ersten und zweiten Tunnels wiedergegebene Bilder nicht miteinander überlappen.

2. Boardingbrücke nach Anspruch 1, worin beide Seitenwände des ersten und zweiten Tunnels eine transparente Außenwand umfassen, und
worin die mehreren transparenten Anzeigen in der transparenten Außenwand angeordnet sind und einen Bildschirm zu der Innenseite des ersten und zweiten Tunnels anzeigen.

3. Boardingbrücke nach Anspruch 2, worin die Überlappungserfassungssensoren jeweils an einer Seite der in dem zweiten Tunnel angeordneten transparenten Anzeigen vorgesehen sind, um ein Annähern des anderen Endbereiches des ersten Tunnels zu erfassen, der dem zweiten Tunnel benachbart ist.

4. Boardingbrücke nach Anspruch 2, worin die Überlappungserfassungssensoren mehrere Annäherungssensoren oder mehrere Endschalter sind.

5. Boardingbrücke nach Anspruch 1, welche weiter mehrere Passagierbewegungs-Erfassungssensoren umfasst,
worin die mehreren Passagierbewegungs-Erfassungssensoren auf der Seite der entsprechenden Zugänge angeordnet sind, die einem Verbindungsteil des ersten Tunnels und des zweiten Tunnels abgewandt sind, und
worin die Passagierbewegungs-Erfassungssensoren einen von einem Infrarotsensor, einem optischen Sensor, und einem Ultraschallsensor umfassen.

6. Boardingbrücke nach Anspruch 2, worin ein unterer Bereich der transparenten Außenwand weiter mehrere transparente Anzeigen umfasst, die einen Bildschirm zu der Außenseite des ersten und zweiten Tunnels anzeigen.

7. Boardingbrücke nach Anspruch 4, worin die mehreren transparenten Anzeigen jeweils einen Richtlautsprecher umfassen.

8. Boardingbrücke nach Anspruch 7, worin die mehreren transparenten Anzeigen jeweils weiter eine Kennzeichnung umfassen, und
worin die Kennzeichnung eines von einer Nahfeldkommunikation (NFC), einem QR-Code, und einem Strichcode umfasst.

9. Boardingbrücke nach Anspruch 2, worin die transparenten Anzeigen vorgesehen sind, auf der transparenten Außenwand vertikal gleitfähig zu sein.

10. Boardingbrücke nach Anspruch 9, worin der erste und zweite Tunnel weiter mehrere Rahmen umfasst, die auf der transparenten Außenwand in einem regelmäßigen Intervall längsseitig angeordnet sind,
worin die entsprechenden Seitenoberflächen der transparenten Anzeigen mehrere Kupplungsvorwölbungen umfassen,
worin die mehreren Rahmen mehrere Aufnahmeaussparungen umfassen, die entlang einer Längsrichtung ausgebildet sind, und
worin die transparenten Anzeigen entlang der Längsrichtung der Rahmen bewegbar befestigt sind.

11. Boardingbrücke nach Anspruch 2, worin die mehreren transparenten Anzeigen eines von einer transparenten Flüssigkristallanzeige (LCD), einer transparenten Licht-emittierenden Diode (LED), und einer transparenten organischen Licht-emittierenden Diode (OLED) umfassen.

12. Boardingbrücke nach Anspruch 2, worin die mehreren transparenten Anzeigen in der transparenten Außenwand eingefügt sind.

13. Verfahren zum Steuern einer Boardingbrücke, wobei das Verfahren umfasst:
Erfassen, ob sich transparente Anzeigen (300,310,320,330,340,350,360), die in einem inneren Tunnel und einem äußeren Tunnel entsprechend angeordnet sind, durch Strecken und Kürzen der inneren Tunnels oder des äußeren Tunnels in einer Längsrichtung miteinander überlappen oder nicht, durch einen Überlappungserfassungssensor (600,610,620,630);
Auswählen mindestens einer in dem inneren Tunnel angeordneten transparenten Anzeige unter den überlappenden transparenten Anzeigen und mindestens einer in dem äußeren Tunnel angeordneten nicht-überlappenden transparenten Anzeige;
Erfassen der Anzahl sich bewegender Passagiere des inneren Tunnels und des äußeren Tunnels durch einen Passagierbewegungs-Erfassungssensor (710,720); und
Anschalten nur der ausgewählten transparenten Anzeigen, wenn die durch den Passagierbewegungs-Erfassungssensor erfasste Anzahl sich bewegender Passagiere einen Referenzwert oder mehr erreicht, durch eine Steuerung.

14. Verfahren nach Anspruch 13, welches weiter umfasst:
Bestimmen einer Bewegungsrichtung der Passagiere durch den Passagierbewegungs-Erfassungssensor; und
Wiedergabe eines Bildes für Ankunft oder eines Bildes für Abflug durch die ausgewählten transparenten Anzeigen entlang der Bewegungsrichtung der Passagiere.

## Revendications

1. Passerelle d'embarquement comprenant :
un premier tunnel (100) configuré de manière à être raccordé à une porte d'embarquement ;
un second tunnel (200) configuré de manière à être raccordé par chevauchement au premier tunnel ; et
un contrôleur,
dans lequel chaque tunnel parmi le premier tunnel et le second tunnel présente une pluralité d'écrans d'affichage transparents (300, 310, 320, 330, 340, 350, 360), et **caractérisé en ce que** chacun desdits tunnels inclut un ou plusieurs capteurs de détection de chevauchement (600, 610, 620, 630),
le contrôleur étant configuré de sorte que,
lorsqu'il est détecté que les écrans d'affichage transparents des premier et second tunnels se chevauchent, par le biais des capteurs de détection de chevauchement qui détectent si les écrans d'affichage transparents du premier tunnel et les écrans d'affichage transparents du second tunnel se chevauchent mutuellement, le contrôleur commande sélectivement une reproduction d'images des écrans d'affichage transparents des premier et second tunnels, de sorte que des images reproduites dans les écrans d'affichage transparents des premier et second tunnels ne se chevauchent pas mutuellement.

2. Passerelle d'embarquement selon la revendication 1, dans laquelle les deux parois latérales des premier et second tunnels incluent une paroi extérieure transparente ; et
les écrans de la pluralité d'écrans d'affichage transparents sont disposés à l'intérieur de la paroi extérieure transparente et affichent un écran vers l'intérieur des premier et second tunnels.

3. Passerelle d'embarquement selon la revendication 2, dans laquelle les capteurs de détection de chevauchement sont chacun fournis sur un côté des écrans d'affichage transparents disposés dans le second tunnel pour détecter une approche de l'autre partie d'extrémité du premier tunnel qui est adjacente au second tunnel.

4. Passerelle d'embarquement selon la revendication 2, dans laquelle les capteurs de détection de chevauchement correspondent à une pluralité de capteurs de proximité ou à une pluralité d'interrupteurs de fin de course.

5. Passerelle d'embarquement selon la revendication 1, comprenant en outre une pluralité de capteurs de détection de mouvement de passagers,
dans laquelle les capteurs de la pluralité de capteurs de détection de mouvement de passagers sont disposés sur le côté des entrées respectives, opposé à une partie de raccordement du premier tunnel et du second tunnel ; et
les capteurs de détection de mouvement de passagers incluent un capteur quelconque parmi un capteur infrarouge, un capteur optique et un capteur ultrasonore.

6. Passerelle d'embarquement selon la revendication 2, dans laquelle une partie inférieure de la paroi extérieure transparente inclut en outre une pluralité d'écrans d'affichage transparents affichant un écran vers l'extérieur des premier et second tunnels.

7. Passerelle d'embarquement selon la revendication 4, dans laquelle chaque écran d'affichage de la pluralité d'écrans d'affichage transparents inclut un haut-parleur directionnel.

8. Passerelle d'embarquement selon la revendication 7, dans laquelle chaque écran d'affichage de la pluralité d'écrans d'affichage transparents inclut en outre une étiquette ; et
l'étiquette inclut l'un quelconque des éléments parmi une communication en champ proche (NFC), un code à barres 2D, et un code à barres.

9. Passerelle d'embarquement selon la revendication 2, dans laquelle les écrans d'affichage transparents sont disposés de manière à pouvoir coulisser verticalement sur la paroi extérieure transparente.

10. Passerelle d'embarquement selon la revendication 9, dans laquelle les premier et second tunnels incluent en outre une pluralité de cadres disposés longitudinalement à intervalles réguliers sur la paroi extérieure transparente ;
les surfaces latérales respectives des écrans d'affichage transparents incluent une pluralité de saillies de couplage ;
la pluralité de cadres inclut une pluralité de rainures d'accueil formées le long d'une direction de longueur ; et
les écrans d'affichage transparents sont fixés de manière à pouvoir se déplacer le long de la direction de longueur des cadres.

11. Passerelle d'embarquement selon la revendication 2, dans laquelle la pluralité d'écrans d'affichage transparents inclut l'un quelconque des éléments parmi un affichage à cristaux liquides (LCD) transparent, une diode électroluminescente (LED) transparente, et une diode électroluminescente organique (OLED) transparente.

12. Passerelle d'embarquement selon la revendication 2, dans laquelle les écrans de la pluralité d'écrans d'affichage transparents sont encastrés dans la paroi extérieure transparente.

13. Procédé de commande d'une passerelle d'embarquement, le procédé comprenant les étapes ci-dessous consistant à :
détecter, par le biais d'un capteur de détection de chevauchement (600, 610, 620, 630), si des écrans d'affichage transparents (300, 310, 320, 330, 340, 350, 360), disposés chacun dans un tunnel intérieur et un tunnel extérieur, se chevauchent mutuellement, en étendant et en raccourcissant le tunnel intérieur ou le tunnel extérieur dans une direction de longueur ;
sélectionner au moins un écran d'affichage transparent disposé dans le tunnel intérieur parmi les écrans d'affichage transparents en chevauchement et au moins un écran d'affichage transparent sans chevauchement disposé dans le tunnel extérieur ;
détecter, par le biais d'un capteur de détection de mouvement de passagers (710, 720), le nombre de passagers en mouvement du tunnel intérieur et du tunnel extérieur ; et
mettre sous tension, par le biais d'un contrôleur, uniquement les écrans d'affichage transparents sélectionnés, lorsque le nombre de passagers en mouvement détectés par le capteur de détection de mouvement de passagers correspond à une référence ou plus.

14. Procédé selon la revendication 13, comprenant en outre les étapes ci-dessous consistant à :
déterminer une direction de mouvement des passagers par le biais du capteur de détection de mouvement de passagers ; et
reproduire une image pour l'arrivée ou une image pour le départ, à travers les écrans d'affichage transparents sélectionnés, le long de la direction de mouvement des passagers.
